# EUROPEAN PATENT APPLICATION

(11) **EP 4 585 024 A1**
(43) Date of publication of application: **16.07.2025**
(21) Application number: 25151148.1
(22) Date of filing: 10.01.2025
(51) Int. Cl.: A01B 33/02, A01B 33/08

(54) **LOW-COST, HIGHLY SAFE AND RELIABLE AGRICULTURAL MACHINE**

(30) Priority: 12.01.2024 IT 202400000462
(71) Applicant: BCS S.p.A., 20123 Milano (MI) (IT)
(72) Inventor: OMODEO VANONE, Fabrizio, 27036 MORTARA (PV) (IT)
(74) Representative: Dragotti & Associati S.R.L.

(57) **Abstract**

Agricultural machine (10, 10') comprising an engine (11) having a power output, at least one axle (12) provided with two wheels (13), a handlebar (14) and a power take-off (15), said agricultural machine (10, 10') further comprising a clutch assembly (20) interposed between said engine (11) and said at least one axle (12) and a first lever (16) and a second lever (17) associated with said handlebar (14) for controlling said clutch assembly (20),
wherein said clutch assembly (20) comprises two axially movable drive pistons (30, 31), coaxial with each other and locked for rotation, mechanically controlled by said first lever (16) and said second lever (17) and axially movable between a first position, in which said drive pistons (30, 31) impose on said clutch assembly (20) the transmission of motion from the engine to the wheels and to the tool, and a second position in which said drive pistons (30, 31) release said clutch assembly (20) by disconnecting said engine from said wheels and from said tool;
wherein said clutch assembly (20) is "normally open" and does not transmit motion when said first lever (16) and said second lever are not actuated,
wherein there is also a mechanical block (59) which, when a first cable (42) connected to the first lever (16) and a second cable (43) connected to the second lever (17) are at rest, upon the operator leaving the two levers (16, 17) and the handlebar (14), prevents the machine from restarting by operating the first lever (16) alone.

## Description

The present invention refers to a highly safe, highly reliable and low-cost agricultural machine.

In particular, it is intended that the machine of the present invention is configured in such a way that it can perform its tasks while guaranteeing reliability and performance at a professional level, being able to be marketed at a price in competition with lower performing products.

The term "agricultural machine" refers to a single-axle machine comprising an internal combustion engine, generally endothermic, running on petrol or a diesel cycle of limited power (normally less than 15 kW, but in the case in question limited to 5 kW). The machine also comprises a clutch, a transmission box, usually with a load-bearing function, which can enclose a gearbox, a single axle driving a pair of wheels, a motorcycle-type handlebar and a power take-off. The handlebar is often called "steering bars" in agricultural terminology and is equipped with the necessary controls for the various drives. Finally, the power take-off is also called "PTO", and the tool it is intended to be used is connected to it.

By way of example, in the event that this tool is a cutter adapted to dig up the soil or other tool positioned on the operator's side with the engine on the opposite side, the machine is called a "cultivator". Otherwise, in the event that the engine is positioned on the operator's side and the tool is a mowing bar, mower, mulcher, snow plough or other equipment positioned on the opposite side, these machines are called "motor mowers".

In some types of such machines, the aforementioned handlebar is movable with respect to the power take-off, being able to rotate up to 180°, thus allowing the operator, once the correct equipment is coupled, to work in the "cultivator" or "motor mower" configuration: in this case, the name "reversible" is added to the definition of these machines.

The described configuration allows this type of machine to carry out a large number of cultivation operations by means of the interchangeability of the tool that can normally be performed by the user him-/herself.

For safety reasons, the regulations currently in force in many countries require that, if the operator lets go of the grip on the steering bars intentionally or due to a problem, thus leaving the machine potentially uncontrolled, said machine must stop, preferably in a limited period of time that in some countries is established as a maximum value.

This result can be achieved thanks to the presence of a "safety" lever also known as "operator presence" or "OPC" (Operator Presence Control) placed on the steering bars and that the operator, during use, must keep pressed or in any case operated to keep the machine running.

A first solution, which in some respects is now not reflected in some regulatory contexts, provides that this lever is connected to the endothermic engine in such a way as to cause it to turn off when it is released by the user.

However, disadvantageously, the stop of the engine, in case of release of the "safety" lever, does not take place immediately due to the own inertias of the engine as well as those of the kinematics and the equipment connected to it.

As a consequence of this fact, the machine can keep on moving for some time, even after the driver has let go of the steering bars, creating a situation of potential danger. Another limit of such a solution described above lies in the fact that, after letting go of the steering bars, and then having stopped the engine, in order to continue the work, the operator is forced to restart it. Since most engines of this type are manually started, the manoeuvre is not always easy due to the physical effort required.

This might unfortunately induce some operators to tamper with the safety device. In fact, they could block it in the actuated position, thus preventing the engine from shutting down and the need to subsequently restart it. All this significantly lowering the safety level of the machine.

A solution to the described drawbacks is given by the use of a coupling, for example a clutch, usually mechanically driven, through which the entire power of the engine is usually transmitted. The clutch also performs the safety function, being engaged through an "operator presence" device, and letting go of it causes the sudden stop of the machine and of the tool.

In order to limit the track width of the machine, reducing the transverse footprint and to allow special cultivation works to be carried out, the diameter of this clutch must be reduced in relation to the power to be transmitted. This limit often makes it mandatory to resort to conical clutches, which work dry, often having abrupt operation, high wear and significant overheating problems due to limited heat dissipation.

To reduce start-up transients, which generate a significant amount of heat, especially with high inertia tools, the spring systems that are used to close these clutches are often very rigid. As a result, the mechanical control, which must be operated by the driver to disengage the clutch, is fatiguing and not very ergonomic. For the same reason, the manual actuation of any "safety lever", directly connected to the clutch itself, would also be uncomfortable, which instead must be comfortable and not tiring for the operator in order to be able to maintain this actuation for the entire duration of the work.

Another disadvantage of the known solutions that use dry working clutches is that, in addition to being prone to overheating, they lead to an early consumption of the shrink discs on the shaft that transmits the motion. This is done, especially using tools such as reciprocating mowing bars that generate impulsive loads whose direction is reversed several hundred times per minute. This is a not negligeable drawback, considering that these mowing bars are one of the most frequently used tools with cultivators and motor mowers.

Finally, generally the wear of the friction material is generally known to be early in such solutions requiring frequent control regulations and increasing the likelihood of malfunctions with potential safety risks.

To overcome all the drawbacks described above, the Applicant has for some years developed some solutions described in its own patents EP2100491 B1 and EP3207779B1. These solutions have been applied to a wide range of cultivators and motor mowers with high safety, even reversible ones, solutions in which, if the user lets go of the steering bars, the machine stops promptly while keeping the engine running.

The adoption of these systems in such machines of the Applicant allows actuating the controls provided at the steering bars with minimal effort by the user. In addition to this, there is also a mechanism that requires a double action to operate the "safety" lever and restart the machine, after letting go of the steering bars themselves.

All these objectives have been achieved by realizing an agricultural machine in which it is envisaged using a so-called hydro-mechanical clutch with multiple discs which is normally disengaged, operated by pressurised oil through two valves with control levers connected to each other. The pressurised oil is supplied by a pump belonging to the same mechanism, driven by a gear. The clutch is also able to perform the automatic brake function to reduce the stopping times of the machine and of the tools operated by it.

The presence of a hydro-mechanical clutch increases the costs that make the machine out of reach for buyers who do not use it for work and who cannot afford a significant purchase cost.

The aim of the present invention is to improve this known embodiment by addressing the problem of cost containment and, consequently, of the purchase price to be borne by the purchaser of the finished product.

In many countries, a wide range of users defined as "Hobby Farmer" has developed to the point of becoming numerically significant. As the term implies, they are farmers, thereby meaning people who are engaged in agricultural and cultivation activities, but in an amateur manner for pleasure or passion and not necessarily to earn their main income. Therefore, the purchase of the machine is perceived by them not so much as an investment, but as a voluptuary good to be obtained with a limited expense. These users typically work on areas of land with limited surface area, often adjacent to their home, and can be configured as typical users of the single-axle machine, whether it is a cultivator or motor mower, with a power contained at most in 5 kW.

Obviously, the type of user described above does not exclude others, since it is possible that even professional users, with requirements similar to the "Hobby Farmers" can profitably use the machines covered by the present invention.

In any case, albeit within the limits of power highlighted, dimensions, reliability, ergonomics and wear resistance achieved with the aforementioned solutions already patented by the Applicant, they must be significantly retained by the present invention also to safeguard the traditional product characteristics of the Applicant himself.

The design line chosen, made possible by the modest installed power, consists of dispensing with hydraulic components, which normally have a high precision and consequent cost, developing a more economical, exclusively mechanical unit, enclosed within an oil-bath casing to the advantage of reliability and heat dissipation. The general aim of the present invention is to realize a highly safe, highly reliable and low-cost agricultural machine capable of solving all the aforementioned problems of the prior art in an extremely simple, very economical and particularly functional manner.

Another aim of the present invention is to realize a highly safe, highly reliable and low-cost agricultural machine that when letting go of the machine its engine is always running without any problem so as to avoid a start-up for any relevant stop.

Another aim of the present invention is to realize a highly safe, highly reliable and low-cost agricultural machine in which there is optimal heat dissipation with gradual engagements and in which wear is limited as much as possible.

The above aims are achieved by a highly safe, highly reliable and low-cost agricultural machine realized according to independent claim 1 and the sub-claims that follow.

The structural and functional characteristics of the present invention and its advantages over the previously disclosed known technique will be even clearer and more evident from an examination of the following description, referred to the attached schematic drawings, which show an example of implementation of the invention itself. In the drawings:
- figure 1 is a side elevation view of an agricultural machine, in particular in the cultivator version;
- figure 2 is a top view of the agricultural machine of figure 1 in the cultivator version, with the enlarged view of figure 2A showing the position of the safety and clutch levers;
- figure 3 is a side elevation view of another agricultural machine, in particular in the motor mower version;
- figure 4 is a top view of the agricultural machine of figure 3 in the motor mower version, with the enlarged view of figure 4A showing the position of the safety and clutch levers;
- figure 5 is a view in enlarged longitudinal vertical section of the clutch assembly belonging to an agricultural machine according to the present invention and figure 5' shows in a highlighted enlarged detail part of the discs indicated with a circle in figure 5;
- figure 6 and figure 6' show in two axonometric views the clutch assembly forming part of the machine according to the invention, the first power take-off on the engine side and the second power take-off on the transmission-power take-off side;
- figure 7 and figure 7' show two axonometric views of the clutch assembly forming part of the machine according to the invention, the first power take-off on the engine side and the second power take-off on the drive-power take-off side, with the components in exploded view according to the axis of the drive shaft;
- figure 8 is a partially sectioned perspective view of the clutch assembly of figure 5;
- figures 9, 9B and 9C are views in longitudinal vertical section of the clutch assembly of figure 5 depicted with the machine "parked", as a whole and in two enlarged details, in which all the controls on the left steering bar are not operated. The engine can be started, but no part of the machine moves as shown in the details of the discs and enlarged movable pistons of the clutch assembly in the neutral position;
- figures 10, 10F and 10G are views in longitudinal vertical section of the clutch assembly of figure 5 depicted with a machine in which the user has operated the "clutch" lever, disengaging it voluntarily (to "accelerate"), or to unlock the "safety" lever (double action). Figures 10F and 10G show enlarged details of the discs and movable pistons of the clutch assembly in the position of figure 10;
- figures 11, 11D and 11E are views in longitudinal vertical section of the clutch assembly of figure 5 depicted with a machine in which the user keeps the "safety" lever operated and has released the "clutch" lever to start or resume the work. Figure 11 shows the clutch assembly as a whole and figures 11D and 11E show in two enlarged details the discs and the movable pistons;
- figure 12 is a vertical cross-sectional view of the clutch assembly of figure 5;
- figure 13 is a top view of figure 5 showing the levers with the relative interconnections and relative operating cables of the same clutch assembly;
- figure 14 schematically shows the safety and control clutch levers on the steering bar, for example left with respect to the operator, of an agricultural machine according to the present invention.

For the illustration of the drawings, use is made in the following description of identical numerals to indicate construction elements with the same function. Further, for illustration clarity, some numerical references may not be repeated in all the figures.

Indications such as "vertical" and "horizontal", "upper" and "lower" (in the absence of other indications) are to be read with reference to the assembly (or operating) conditions and with reference to the normal terminology used in current language, where "vertical" indicates a substantially parallel direction to that of the gravitational force vector "g" and horizontal to a direction perpendicular thereto.

With reference to the exemplary and non-limiting figures, an improved agricultural machine according to the present invention indicated respectively with 10 10' is shown in its entirety.

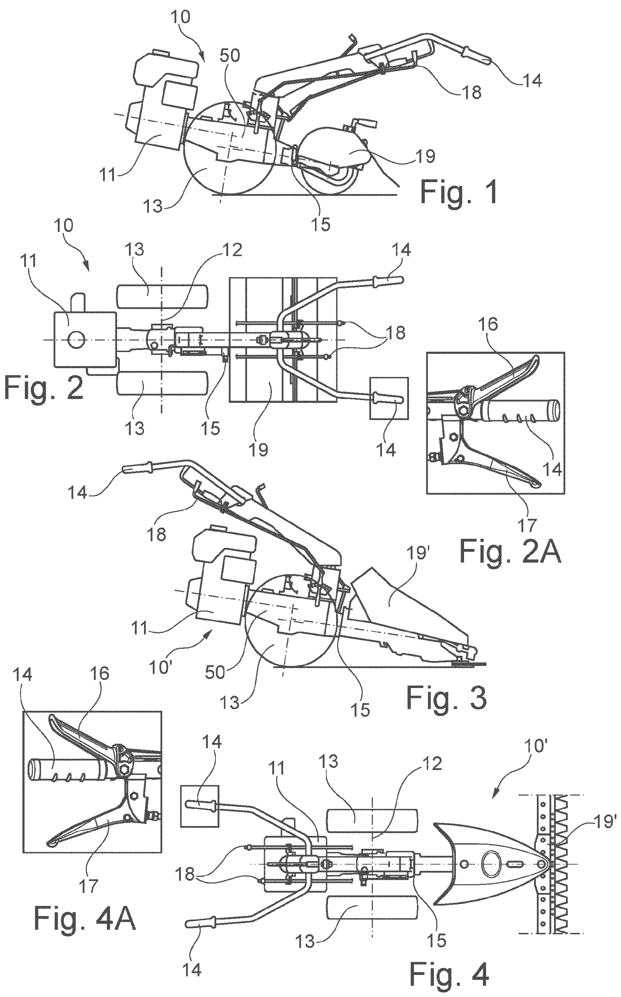

As visible in figures 1-4, said agricultural machine 10, 10' comprises in both examples an engine 11 having a power output, at least one axle 12 provided with two wheels 13, a handlebar 14 and a power take-off 15.

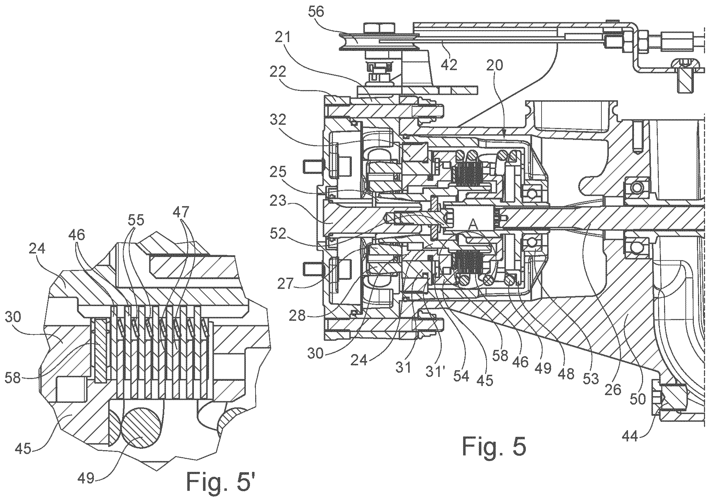

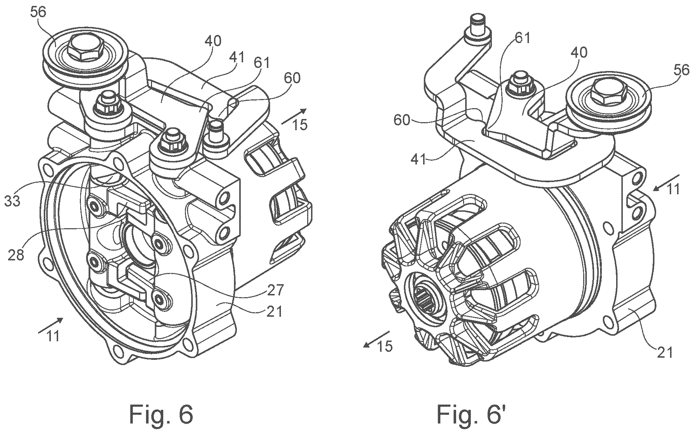

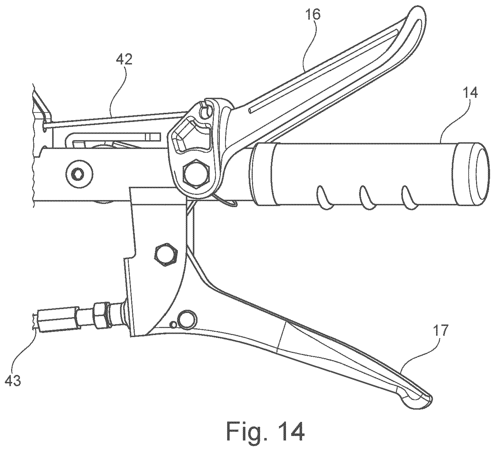

In addition, the agricultural machine 10, 10' comprises a clutch assembly 20 visible mainly in figures 5 and 6, interposed between the engine 11 and the at least one axle 12, as well as a first "safety" lever 16 and a second "clutch" lever 17 (shown in the details of figures 2A and 4A and in figure 14).

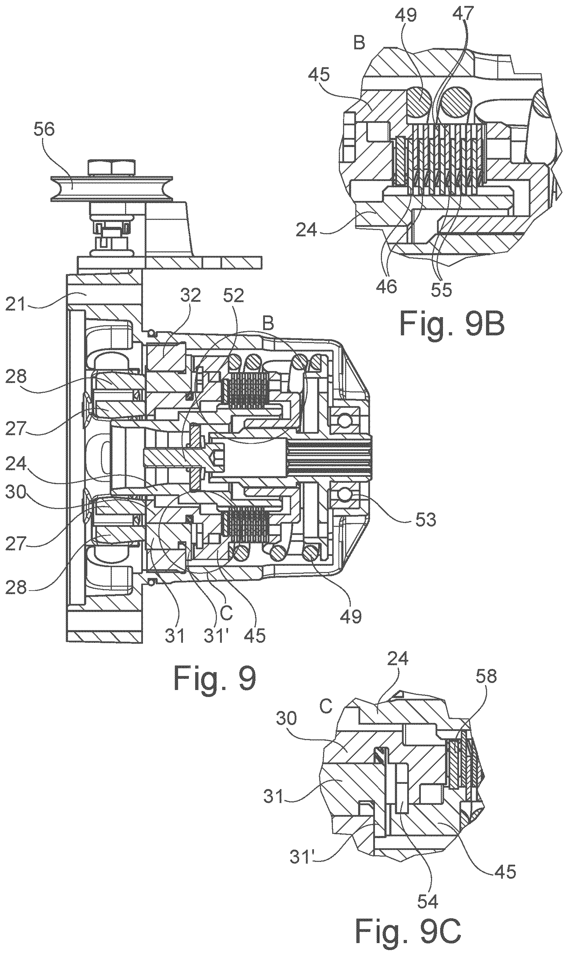

In particular, both the aforementioned levers 16 and 17 are associated with the handlebar 14, as best shown in figure 9, in a position proximal to that provided for the hands of the user using the machine 10, 10' and are for controlling and selectively operating the clutch assembly 20.

Preferably, the agricultural machine 10, 10' according to the present invention also comprises a gearbox interposed between the clutch assembly 20 and the axle 12 as well as control means 18 of the engine 11 and of the gearbox also reachable by the operator gripping the handlebar 14.

The agricultural machine 10, 10' may normally comprise a tool 19 and 19' associated with and operated by the power take-off 15.

According to two embodiment examples, the aforementioned tool can be a cutter 19 adapted to dig up and move the soil and in this case the agricultural machine is a cultivator 10 as shown in figures 1 and 2. Alternatively the tool may be a mowing bar 19' and in such a case the machine is a motor mower 10' as shown in figures 3 and 4.

In addition, the handlebar 14, generally of the motorcycle type, can be orientable at will with respect to the power take-off 15 and the engine 11 depending on the tool 19, 19' to be used in the machine.

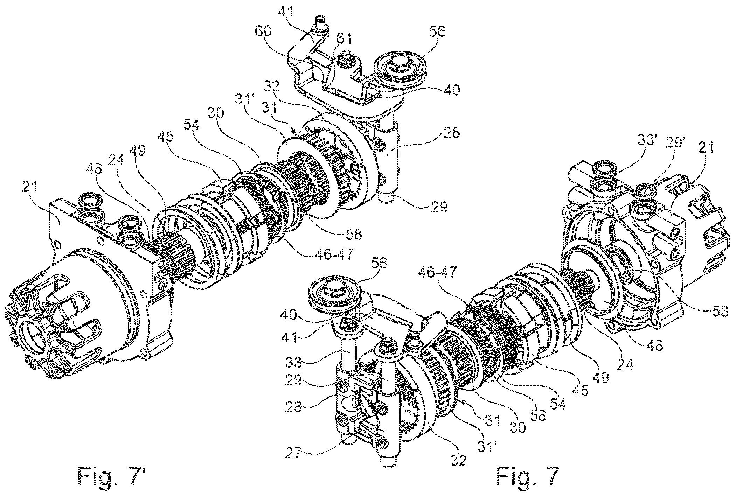

With reference in particular to figures 5, 7, 7', and 8, the clutch assembly 20 is provided with a first element with outer toothing 24 connected to a drive shaft 23, hereinafter referred to as the "inner assembly", and a second bell-shaped element 45 with grooves connected to a primary drive shaft 26 that transfers power to the axle 12, hereinafter referred to as the "outer assembly", directly or indirectly depending on the presence or absence of the gearbox, and to the power take-off 15.

The clutch assembly 20 also comprises a pack composed of discs 46 and 47, facing each other and alternately connected the discs 46 to the "inner assembly" and the discs 47 to the outer assembly. In particular, the discs 46 are movable and can come into contact with the discs 47 and transmit the motion from the inner assembly to the outer assembly by friction.

When the discs 46 and 47 alternately facing and connected to the inner assembly and to the outer assembly come into contact with each other, the motion coming from the shaft 23 is transmitted to the shaft 26 and therefore, possibly modified by the gearbox, to the wheels 13 and to the power take-off 15 for the work tool 19 and 19'.

According to the invention, springs 55, for example so-called Belleville springs (figure 5'), are positioned between each pair of said discs 46 and 47. These springs 55, in the condition of stopped machine and no lever operated, have the task of keeping the discs 46 and 47 open between them so that there is no dragging and the motion cannot be transmitted.

As visible in figures 5, 7, 7' and 8, the clutch assembly 20 comprises a fixed ring 32 locked on a flange 21, for example by screwing it against a stop, and two movable pistons, a first inner 30 and a second outer 31, for actuation. The two movable pistons, 30 inner and 31 outer one, can be controlled by the user mechanically by acting on the first "safety" lever 16, as well as on the second "clutch" lever 17.

Still referring to figures 5, 5', 7, 7' and 8, the first piston 30 is movable between a first position, in which the discs 46 and 47 are decoupled (figure 5'), and a second position in which the same discs 46 and 47 are coupled to each other.

The clutch assembly 20, integral with the usually endothermic engine 11, is associated with a portion 22 of said engine 11 by means of a flange 21. This clutch assembly 20 receives power through the drive shaft 23, a toothed hub 24 rigidly keyed, preferably through a screw 52, on the drive shaft 23 itself, and a conical bushing 25, associated with the toothed hub 24.

The movable pistons 30 and 31 cannot rotate because the second piston 31, which is externally and internally toothed (figure 7'), engages with the fixed ring 32, in turn internally toothed, and with the first piston 30, externally toothed. Instead, the pistons 30 and 31 can move axially pushed by the mechanical action of an inner dropout 27 and an outer dropout 28, clearly visible in figures 5, 6 and 12 and arranged at their ends.

The two movable drive pistons 30, 31 of the clutch assembly 20 are mechanically actuated by means of the two inner 27 and outer 28 dropouts and without relative rotation can move axially according to the axis of the drive shaft 26 exiting the clutch assembly 20.

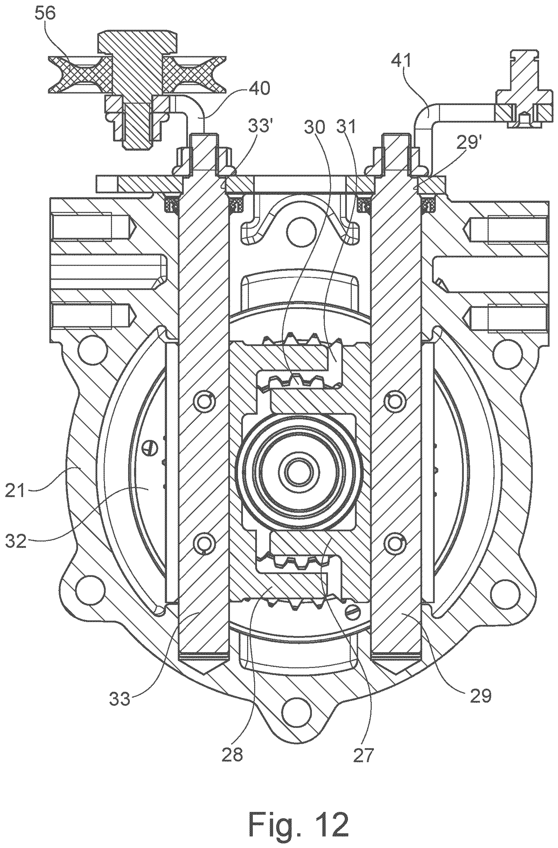

The dropouts 27, 28 are constrained by means of two tubular portions to two pins 29 and 33 that are free to rotate in appropriate housings 29' and 33' obtained in the flange 21. On said pins 29 and 33 a first outer shaped lever 40 and a second outer shaped lever 41 are keyed which in turn are connected via cables 42 and 43 to the "safety" 16 and "clutch" 17 levers on the steering bar 14 as shown in figures 12, 13 and 14.

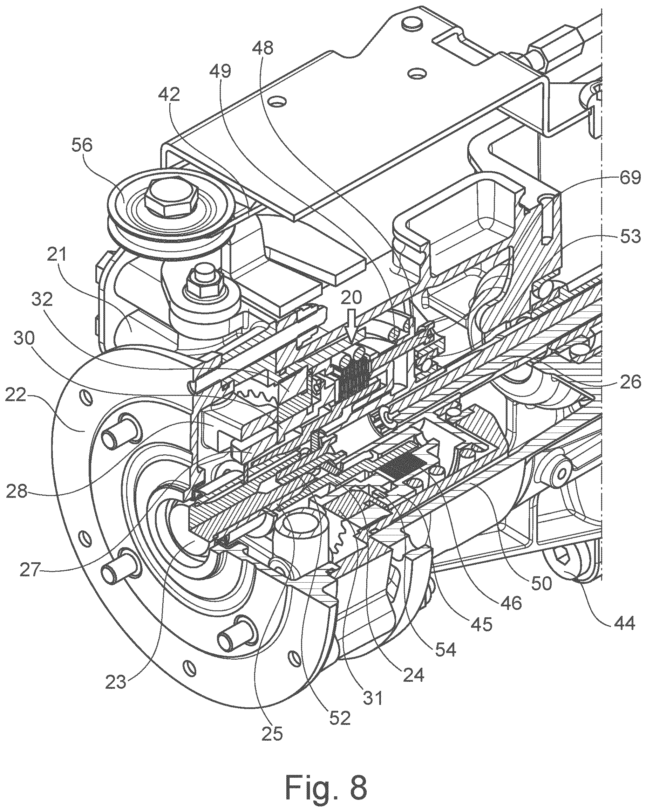

The entire mechanism of the clutch assembly 20 as seen in figures 5 and 8 is enclosed within a casing 50, for example made by light alloy casting, supplied with oil with lubrication and cooling function. To capture the metal particles also deriving from the wear of the discs 46 and 47, a drain plug 44, which is internally provided with a magnetic surface, is arranged in the casing 50.

With reference to figures 5, 7, 7', and 8, a spring 49, for example cylindrical in wound wire, compresses the bell-shaped element 45 reacting against a disc pusher 48. The bell-shaped element 45 rests on a radial projection 31' obtained in the second outer piston 31 which, being rotationally locked, acts as a brake. The disc pusher 48 is keyed on both the primary shaft 26 and the bell-shaped element 45 thereby making them rotationally integral together with the spring 49. Advantageously, and unlike known solutions, the spring 49 is placed outside the pack of discs 46, 47 and the relative bell-shaped element 45 which in this way can be moved axially by compressing the spring 49.

Two provisional screws 69, one of which visible in figure 8, can be provided to facilitate disassembly and extraordinary maintenance operations.

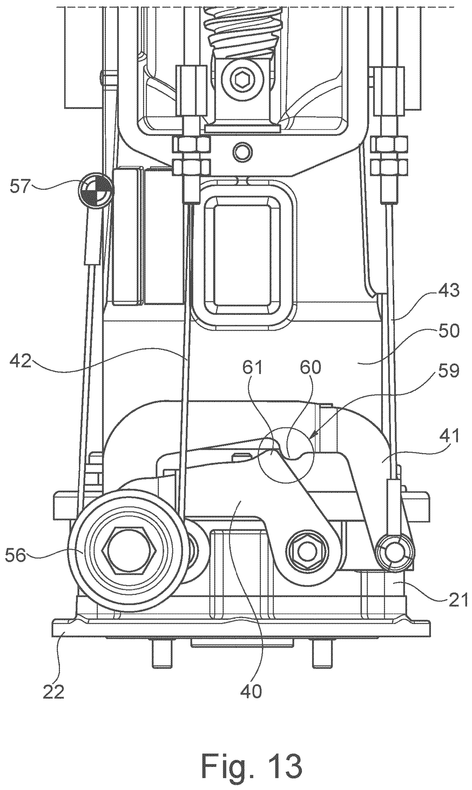

In figures 5, 7 and 8 a support 53, housed in a protrusion or housing of the flange 21, for example made with a rigid ball bearing, which supports the disc pusher 48 can be noted. An elastic ring 54, or other statically equivalent device, encloses the pack of discs 46, 47 together with the Belleville springs 55 within the bell-shaped element 45. In figures 7 and 13 it can be noted how the first outer shaped lever 40 has a pulley 56 constrained to a free end thereof and rotates at the other end thereof around the pin 33. The connection cable 42 with the "safety" lever on the steering bars 16 (in figure 14) is wound on said pulley 56 and a free end of the connection cable 42 is constrained to a fixed point 57 on the machine (figure 13).

Advantageously, this solution allows to contain the dimensions and at the same time reduce the operating force, an essential factor for ergonomics during use, being equivalent from a kinematic point of view to a double length lever.

The second outer shaped lever 41 at a free end thereof is constrained to one end of the connection cable 43 with the "clutch" lever 17. The second outer shaped lever 41 rotates at the other end thereof about the pin 29 when it is commanded to rotate by the cable 43.

Finally, the shape of the shaped levers 40 and 41, as shown in figure 13, is such that their actuation can only take place in a certain sequence by performing a so-called "double action". The shaped levers 40 and 41 when at rest are shaped in such a way that the first shaped lever 40 cannot rotate without being disengaged from the second shaped lever 41. The second shaped lever 41 has in fact a protruding nose 60 that engages on an extension 61 of the first shaped lever 40 to create a mechanical block 59, when the cables 42 and 43 are at rest and the shaped levers 40, 41 folded over each other in engagement between them.

According to the invention, in fact, letting go of the steering bars by the operator inhibits the possibility that the machine can restart only by operating the "safety" lever 16. In order to be able to resume the operations, it is necessary to first disengage the clutch by acting on the "clutch" lever 17 in figure 14. In this way, greater safety is achieved in addition to compliance with regulations in force in various countries.

To achieve the main requirement described above, of keeping the machine and tool unattended completely stationary, even if the engine is running, it is essential that the clutch assembly 20 is "normally open", that is, it does not transmit the motion if no lever is operated, as shown in figures 9, 9C and 9B. Indeed, it is necessary that said clutch assembly 20 also performs a brake function to minimize the machine and tool stop time in the event that the operator lets go of the levers 16 and 17 during use. This requirement is the opposite of what usually occurs in the known solutions of clutch couplings for the above machines which are normally closed at rest and do not include any braking action.

The operation of an agricultural machine according to the present invention is extremely simple.

To start, or resume work, having the engine already started, the operator must first operate the "clutch" lever 17 on the steering bar 14 that operates the cable 43.

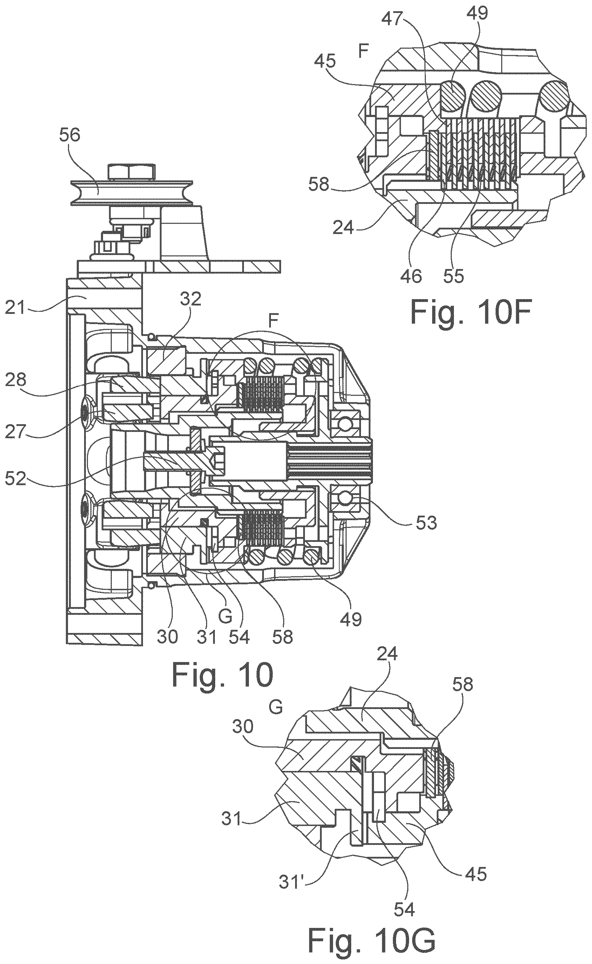

Consequently, starting from the starting or neutral position shown in figures 9, 9B and 9C, by acting on the clutch lever 17, by pulling the cable 43 the second outer shaped lever 41 is moved which in turn rotates the pin 33. The outer dropout 28 pushes axially the second outer piston 31 and consequently the bell-shaped element 45, with the discs 46, 47 (figure 10). This movement further compresses the spring 49. The discs 46 and 47 remain detached from each other and kept away from the Belleville springs 55 (figure 10F). No transmission of motion occurs and the braking effect remains unchanged being guaranteed by the contact between radial projection 31' obtained in the second outer piston 31 and bell-shaped element 45, as highlighted in detail in figure 10G.

With this manoeuvre the operator overcomes the mechanical block indicated with 59, highlighted in figure 13, between the shaped levers 40 and 41, that is between the protruding nose 60 of the second lever 41 which is engaged on the extension 61 of the first shaped lever 40. In this way, the operator can operate the "safety" lever 16 on the steering bar 14.

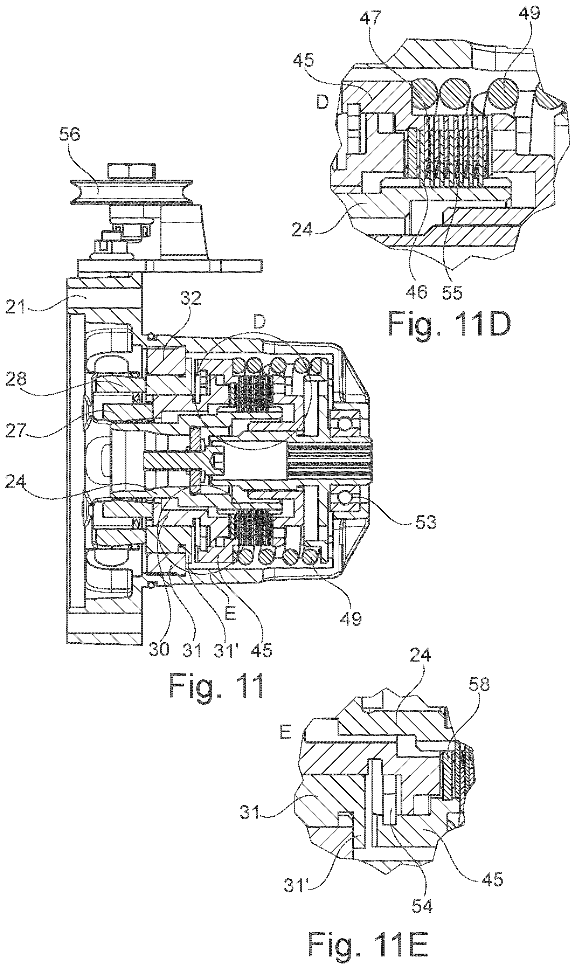

This action allows through the cable 42 and the pulley 56 to be able to move the first outer shaped lever 40 which in turn rotates the pin 29. The rotation of the pin 29 causes the inner dropout 27 to push axially the first inner piston 30 which moves forward in the direction of the pack of discs 46 and 47 (figure 11).

At this point, in an advantageously intuitive way, the user can start the machine by releasing and appropriately modulating the "clutch" lever 17 on the steering bar 14, always keeping the "safety" lever 16 operated.

Under the thrust of the spring 49, the bell 45 with the entire pack of discs 46 and 47 and the radial projection 31' obtained in the second outer piston 31, no longer retained by the outer dropout 28, move forward axially in the direction of the endothermic engine. But they are stopped by the first inner piston 30, the position of which is predetermined by the stroke imposed on the mechanical control members described above. The force of the spring 49 prevails, having a multiple value, over that of the springs 55. The pack of discs 46 and 47 is closed, the power is transmitted, the braking effect is cancelled because the bell 45 is not in contact with the outer ring 32, as highlighted in detail in figure 11E, the machine and tool move performing the intended work.

Since the first inner piston 30 cannot rotate, having to act as an abutment against the bell 45 and discs 46, 47 assembly which is instead rotated, the use of a system to reduce friction between the first piston 30 and the first disc 47 of the disc pack 46, 47 is required, preventing seizures and other inconveniences. In the present solution, for example, an axial roller bearing is adopted, indicated with 58 in figures 5, 7 and 7'.

If the operator releases the steering bars, the system under the thrust of the inner springs returns by construction to the neutral disengaged position and the machine stops in a very short time thanks to the braking action. The assembly is arranged in the neutral position shown in figure 9 and in figure 9c in the relative detail.

In this way, the previously mentioned advantages are achieved, which are now briefly summarized, overcoming the limitations and drawbacks of the known solutions.

The clutch is normally open, thus having an intrinsic safety against accidental movements because all the controls that enable start-up act positively according to the principle: no action on the controls = no movement of the machine.

There are no hydraulic components and the dimensions remain small, the only limit of the transmittable power makes the application suitable for machines typical of the aforementioned advanced amateur use (Hobby Farmer).

Advantageously, the stop of the machine upon letting go of the "operator presence" system (OPC) is significantly instantaneous thanks to the braking action incorporated in the clutch assembly.

When letting go of the machine, the engine remains running, there is no need to start it manually and the main incentive to tamper with the safety system is no longer present.

To resume work after releasing the steering bars, a double action is required, which consists of having to operate the "clutch" lever and then lower the "safety" lever. The start is then made completely intuitively by releasing the "clutch" lever.

The aforementioned controls, i.e. the "safety" lever and the "clutch" lever, are advantageously smooth to operate and ergonomic, having to act with favourable lever arms thanks to the pulley and the multiple disc configuration with many surfaces transmitting motion.

The clutch, being in an oil bath, allows better heat dissipation and more gradual engagements without the need for dimensional increases or structural modifications to the machine, which thus keeps all the desired characteristics unchanged.

There is no change in the layout and logic of the controls compared to other general-purpose solutions and especially on the Applicant's machines, which minimizes the risks associated with unprepared users.

The built-in control members, the inner and outer dropouts, act on fixed surfaces, eliminating wear and heating.

The clutch assembly is immersed in oil inside a sealed casing and protected from contamination.

Thus, it has been seen that the agricultural machine according to the present invention achieves the aims set forth above.

The agricultural machine of the present invention thus conceived is susceptible to many modifications and variants, all falling within the same inventive concept; furthermore, all details can be replaced by equivalent technical elements. In practical execution, the materials used, as well as their dimensions, may be any in accordance with technical requirements and the state of the art.

The purpose mentioned in the preamble of the description is thus achieved.

The scope of protection of the present invention is defined by the appended claims.

## Claims

1. Agricultural machine (10, 10') comprising an engine (11) having a power output, at least one axle (12) provided with two wheels (13), a handlebar (14) and a power take-off (15), said agricultural machine (10, 10') further comprising a clutch assembly (20) interposed between said engine (11) and said at least one axle (12) and a first lever (16) and a second lever (17) associated with said handlebar (14) for controlling said clutch assembly (20),
wherein said clutch assembly (20) comprises two axially movable drive pistons (30, 31), coaxial with each other and locked for rotation, mechanically controlled by said first lever (16) and said second lever (17) and axially movable between a first position, in which said drive pistons (30, 31) impose on said clutch assembly (20) the transmission of motion from the engine to the wheels and to the tool, and a second position in which said drive pistons (30, 31) release said clutch assembly (20) by disconnecting said engine from said wheels and from said tool;
wherein said clutch assembly (20) is "normally open" and does not transmit motion when said first lever (16) and said second lever are not actuated,
wherein there is also a mechanical block (59) which, when a first cable (42) connected to the first lever (16) and a second cable (43) connected to the second lever (17) are at rest, upon the operator leaving the two levers (16, 17) and the handlebar (14), prevents the machine from restarting by operating the first lever (16) alone.

2. Agricultural machine (10, 10') according to claim 1, **characterised in that** said two movable drive pistons (30, 31) of said clutch assembly (20) are mechanically axially actuated by means of two dropouts, one inner (27) and the other outer (28) without relative rotation according to an axis of a drive shaft (26) exiting said clutch assembly (20).

3. Agricultural machine (10, 10') according to claim 2, **characterised in that** said dropouts (27, 28) are constrained by means of two pins (29, 33) which are free to rotate in appropriate housings (29', 33') obtained in a flange (21) of said clutch assembly (20), said pins (29, 33) further bearing said mechanical block (59) comprising a first outer shaped lever (40) and a second outer shaped lever (41) in turn connected by cables (42, 43) to the first lever (16) and to the second lever (17).

4. Agricultural machine (10, 10') according to claim 2, **characterised in that** said clutch assembly (20) comprises a first element with outer toothing (24) connected to a drive shaft (23) which is in turn connected to said engine (11) and a bell-shaped element (45) connected to said drive shaft (26), said clutch assembly (20) further comprising a pack composed of discs (46, 47) facing each other, wherein said discs (46) are movable and can come into contact with said discs (47), between each pair of said discs (46, 47) facing each other, springs (55) being positioned which, with the machine stationary and with no lever operated (16, 17) with the clutch open, keep said discs (46, 47) open to each other so that there is no drag and motion cannot be transmitted, there also being provided a spring (49), in a position external to said pack of discs (46, 47) and to said bell-shaped element (45), which achieves automatic braking by pushing said bell-shaped element (45) against a radial projection (31') obtained in said second outer piston (31).

5. Agricultural machine (10, 10') according to claim 1, **characterised in that** said clutch assembly (20) comprises:
- an inner assembly associated with a drive shaft (23),
- an outer assembly associated with an output drive shaft (26) and said axle (12),
- a pack of discs (46, 47) alternately facing each other, the first discs (46) connected to said inner assembly and second discs (47) to said outer assembly, respectively,
wherein the first discs (46) are movable coming into contact with the second discs (47) and transmit motion from said inner assembly to said outer assembly depending on the position of said two movable pistons (30, 31),
wherein when said movable pistons (30, 31) are in a first inactive position said discs (46, 47) are decoupled and an automatic braking function is present for the machine and the tool, and
when said movable pistons (30, 31) are in a second position said discs (46, 47) are coupled to transmit motion.
